# EUROPÄISCHE PATENTSCHRIFT

(11) **EP 1 918 143 B1**
(45) Veröffentlichungstag und Bekanntmachung des Hinweises auf die Patenterteilung: **12.12.2012**
(21) Anmeldenummer: 07020776.6
(22) Anmeldetag: 24.10.2007
(51) Int. Cl.: B60J 7/06, B60J 7/12

(54) **Nutzfahrzeug-Planendach-Anordnung**
Tarpaulin roof assembly for a commercial vehicle
Ensemble de toit bâché pour véhicule utilitaire

(30) Priorität: 04.11.2006 DE 102006052065
(43) Veröffentlichungstag der Anmeldung: 07.05.2008
(73) Patentinhaber: TSE Trailer-System-Engineering GmbH & Co. KG, 72365 Ratshausen (DE)
(72) Erfinder: Seifritz, Harald, 82229 Seefeld (DE)
(74) Vertreter: Weber, Gerhard

(56) Entgegenhaltungen:
- EP-A- 0 778 169
- EP-A- 0 882 612
- EP-A- 1 122 108
- CH-A- 136 218
- DE-A1- 2 436 794
- DE-A1- 19 544 619

## Beschreibung

Bei Nutzfahrzeugen mit Planendächern ist typischerweise eine die Dachöffnung zwischen entlang der Außenseiten des Laderaums in Fahrzeug-Längsrichtung verlaufenden Dachholmen in einer Schließstellung mit im wesentlichen ebenem Verlauf überspannende Dachplane in eine Öffnungsstellung mit zumindest teilweiser Freilegung der Dachöffnung verlagerbar. Typischerweise verlaufen quer zur Längsrichtung zwischen den parallelen Dachholmen mehrere Spriegel, auf welchen die Dachplane aufliegt. Die Spriegel weisen in der Schließstellung der Dachplane einen maximalen gegenseitigen Abstand auf und sind entlang der Dachholme in Längsrichtung verschiebbar. Die Spriegel sind in der Regel über seitlich an den Spriegelenden ausgebildete Rollenwagen in Führungen der Dachholme abgestützt. Im Bereich der Rollenwagen sind Aufstellelemente einer Aufstellvorrichtung an den Spriegeln angelenkt, welche unter der Dachplane verlaufen und bei maximalem Längsabstand benachbarter Spriegel eine gestreckte Stellung mit minimalem Vertikalabstand zu den Dachholmen einnehmen. Die Aufstellelemente können dabei auf den Dachholmen oder den Spriegeln abgestützt sein.

Beim Zusammenschieben benachbarter Spriegel stellen sich die Aufstellelemente unter vertikaler Anhebung eines in Längsrichtung zwischen den Anlenkungen an den Spriegeln liegenden Stützbereichs auf. Die Plane ist typischerweise an den äußeren Enden der Spriegel befestigt und wird durch Anheben der Stützbereiche aufgefaltet. Ausführungen mit über die Fahrzeugbreite durchgehenden Bügeln als durchgehenden Stützflächen der Aufstellvorrichtung zwischen seitlich gegenüber liegenden Stützbereichen sind bekannt, aus Kostengründen und Gewichtsgründen aber ungünstig.

Für die Ausführung der Aufstellvorrichtung, deren Stützbereiche und Anlenkungen an die Spriegel sind verschiedene Varianten bekannt, z. B. aus EP 0 444 733 A1, DE 195 44 619 C2 oder DE 25 35 131 C2, DE 2436794 A1, EP 0778169A1 mit die Breite der Plane überspannenden und die Plane beim Anheben stützenden Stützbügeln oder aus EP 0 882 612 A1, EP 1 122 108 A2 mit bei den Dachholmen an den Spriegeln abgestützten faltbaren Aufstellelementen. Die CH 136218 A beschreibt ein Schiebeverdeck eines Personenkraftwagens.

Der Erfindung liegt die Aufgabe zugrunde, eine solche Nutzfahrzeug-Planendach-Anordnung mit Aufstellelementen zwischen in Längsrichtung benachbarten Spriegeln weiter zu verbessern.

Die Erfindung ist im unabhängigen Patentanspruch 1 beschrieben. Die abhängigen Ansprüche enthalten vorteilhafte Ausgestaltungen und Weiterbildungen der Erfindung.

Der seitliche Versatz der Stützflächen der Aufstellvorrichtung gegen die außen liegenden Dachholme zur Mittellängsebene des Fahrzeugs hin vermindert auf einfache Weise das Entstehen von Wassersäcken auf der Plane bei der Fahrzeugmitte, indem zum einen in der Schließstellung der Plane mit maximalem Abstand benachbarter Spriegel die gestreckten Aufstellelemente mit den Stützflächen ein Absinken der Plane bei der Fahrzeugmitte vermindern und zum anderen durch einen verbesserten Abfluss von angesammeltem Wasser nach außen. Die Stützflächen verlaufen vorteilhafterweise im wesentlichen horizontal. Die Stützflächen sind bis zu einer Aufstellebene bei minimalem Spriegelabstand anhebbar. In dem Bereich der Dachholme liegen keine Stützflächen in der Aufstellebene vor.

Die Stützflächen der Aufstellebene liegen vorteilhafterweise in der gestreckten Stellung der Aufstellelemente, d. h. bei geschlossenem Dach ungefähr in der Ebene der Planenauflagen der Spriegel. Im Bereich der Dachholme kann die Plane bei offenem und/oder bei geschlossenem Dach vorteilhafterweise zwischen den Spriegeln auch tiefer liegen als auf den Spriegeln. Bei offenem Dach mit minimalem Längsabstand der Spriegel befinden sich die Stützflächen in einer Aufstellebene über der Ebene der Planenauflagen der Spriegel. Vorteilhafterweise kann bei minimalem Längsabschnitt der Spriegel an den äußeren Enden der Spriegel und/oder zwischen den die Spriegel tragenden Schlitten oder Rollenwagen eine Lücke in Längsrichtung verbleiben, in welche eine Falte der Plane mit geringer Gefahr der Beschädigung der Plane einliegen kann.

Der seitliche Abstand der den Dachholmen in Querrichtung nächsten Stützflächen der Aufstellvorrichtung von den in der Regel die seitlichen Außenränder des abgedeckten Laderaums bildenden Dachholmen beträgt wenigstens 15 %, insbesondere wenigstens 20 %, vorzugsweise wenigstens 25 % des seitlichen Abstands der Dachholme. Die Anlenkungen der Aufstellelemente an den Spriegeln sind vorteilhafterweise um im wesentlichen gleiche Maße von den Dachholmen zur Mittellängsebene des Fahrzeugs hin versetzt, so dass bei typischer Verwendung von Stabelementen in den Aufstellelementen die Stabelemente zwischen den spriegelseitigen Anlenkungen und den Stützflächen in vertikalen Ebenen verlaufen.

In erster vorteilhafter Ausführung sind zwischen zwei in Längsrichtung benachbarten Spriegeln jeweils zwei vorzugsweise symmetrisch zur Mittellängsebene des Fahrzeugs angeordnete Aufstellelemente vorgesehen. Bei in Querrichtung mehreren beabstandet angeordneten Aufstellelementen sind vorzugsweise den beabstandeten Aufstellelementen zugeordnete Stützflächen gleichfalls in Querrichtung getrennt und nicht in Form von Stützbügeln, Stützrohren etc. in Querrichtung zwischen beabstandeten Aufstellelementen durchgehend. In bevorzugter Ausführung kann zwischen zwei in Längsrichtung beabstandeten Spriegeln jeweils genau ein mit der Stützfläche bei der Mittellängsebene des Fahrzeugs angeordnetes Aufstellelement vorgesehen sein, wodurch sich eine Vereinfachung des Aufbaus und damit verbunden eine Verringerung der Herstellungskosten ergibt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Situation entsprechend gebräuchlichen Anordnungen,
- Fig. 2: eine erste Ausführung der Erfindung,
- Fig. 3: eine bevorzugte Ausführung der Erfindung,
- Fig. 4: eine Seitenansicht auf eine Planendach-Anordnung.

Die Abbildungen sind nicht maßstäblich zu verstehen und relative Abmessungen der dargestellten Komponenten sind zur besseren Veranschaulichung verschiedener Merkmale bewußt verzerrt.

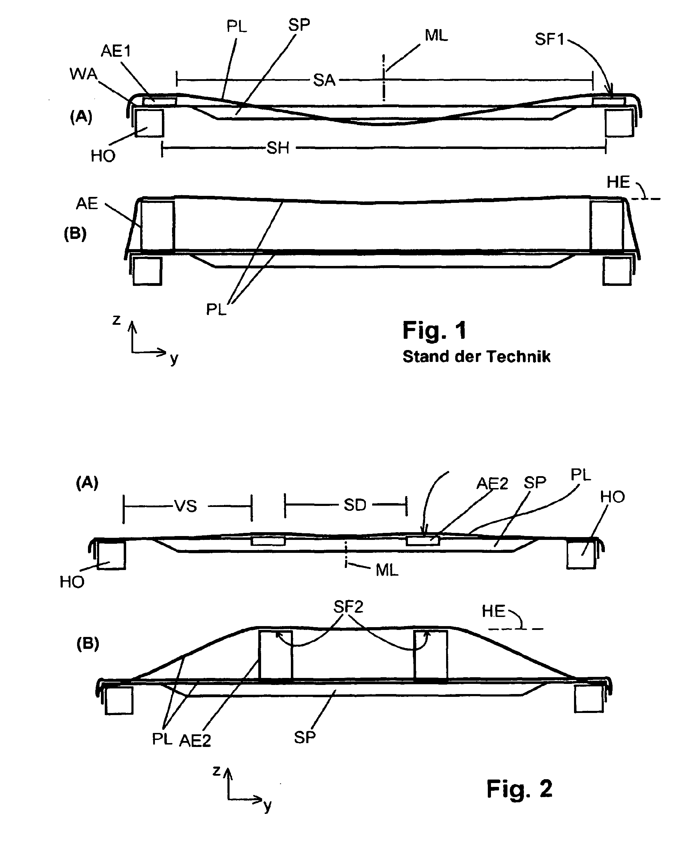

Fig. 1 zeigt mit Blickrichtung in Längsrichtung eines Fahrzeugs eine Situation entsprechend gebräuchlichen auf dem Markt befindlichen Planendach-Anordnungen bei geschlossenem Dach (A) und bei geöffnetem Dach (B) zum Vergleich. Ein rechtwinkliges x-y-z-Koordinatensystem ist mit angedeutet, wobei die in x-Richtung verlaufende Längsrichtung des Fahrzeugs senkrecht auf der Zeichenebene steht. Bei auf ebener Fläche stehendem Fahrzeug entspricht die y-Richtung der Horizontalen und die z-Richtung der Vertikalen. Zwei in Längsrichtung x verlaufende Dachholme HO bilden in seitlicher y-Richtung im wesentlichen die Begrenzung eines Laderaums eines Nutzfahrzeug-Aufbaus. Die Holme HO, welche typischerweise als Aluminium-Strangpressprofile ausgeführt sind, sind nur schematisch eingezeichnet. Der seitliche Abstand der Holme HO ist mit SH bezeichnet. Der Laderaum ist überbrückt durch eine Mehrzahl von Spriegeln SP, welche langgestreckt in y-Richtung verlaufen und an ihren entgegen gesetzten Enden jeweils Rollenwagenanordnungen WA aufweisen, die in Führungen der Holme HO geführt sind. Aufbauten von Holmen, Spriegeln und Rollenwagen sind in verschiedenen Varianten allgemein bekannt und gebräuchlich. Mit den Spriegeln in Seitenrichtung y im Bereich der Rollenwagen WA bzw. der Holme HO verbunden sind Aufstellelemente AE1, welche bei geschlossenem Planendach entsprechend Fig. 1(A) in x-Richtung senkrecht zur Zeichenebene gestreckt liegen und sich nur um ein geringes Maß vertikal über die Holme HO erheben. Die Aufstellelemente AE1 sind gelenkig mit den Spriegeln, insbesondere im Bereich der Rollenwagen WA verbunden und weisen in Längsrichtung zwischen benachbarten Spriegeln nach oben der Dachplane PL zuweisend Stützflächen SF auf, welche annähernd mittig in Längsrichtung zwischen benachbarten Spriegeln und in seitlicher y-Richtung zumindest teilweise mit den Holmen HO überlappen.

In der in Fig. 1(A) skizzierten Schließstellung des Daches mit gestreckten Aufstellelementen ist die Plane typischerweise in Längsrichtung senkrecht zur Zeichenebene gespannt. Über den Spriegeln liegt die Plane auf den Spriegeln auf und verläuft dabei im wesentlichen horizontal. Die Plane ist typischerweise an beiden Enden der Spriegel an deren in y-Richtung nach außen weisenden Flächen punktuell befestigt. In Längsrichtungsbereichen zwischen den Spriegeln, insbesondere in Längsrichtungspositionen bei den Stützflächen SF1 der Aufstellelemente AE liegt die Plane auf den Stützflächen SF1 in vertikaler z-Richtung ungefähr auf Höhe der Spriegel. Im Bereich der Mittellängsebene ML des Fahrzeugs hängt die Plane aber typischerweise nach unten durch, so dass sich hier Wasser ansammeln kann, welches im Winter auch gefrieren und zu unter Sicherheitsaspekten problematischen Eisbrocken gefrieren kann.

Fig. 1(B) zeigt eine gebräuchliche Planenabdeckung in geöffnetem Zustand, wobei die Aufstellelemente AE1 aus der gestreckten Stellung in eine aufrechte Stellung abgewinkelt sind und die Stützflächen SF1 in einer Aufstellebene HE wesentlich oberhalb der Holme HO bzw. der Planen-Auflageflächen der Spriegel SP liegen. Die Plane PL ist in diesem geöffneten Zustand des Daches aufgefaltet. Die Spriegel liegen in Längsrichtung mit minimalem Abstand aneinander. Die Plane zeigt weiter den vertikalen Durchhang im Verlauf in y-Richtung, was bei dem geöffneten Dach aber weniger problematisch ist, da der Abstand der Falten der Plane in Längsrichtung gering ist. Es sind auch Anordnungen bekannt und gebräuchlich, bei welchen die Stützflächen durch in Querrichtung y über die Breite des Laderaums durchgehende Stützholme oder Stützrohre gebildet sind, was aber durch das Gewicht solcher Stützholme nachteilig ist.

Fig. 2 zeigt eine erste vorteilhafte Ausführung der Erfindung, bei welcher die Stützflächen SF2 zu Aufstellelementen AE2 einer Aufstellvorrichtung in y-Richtung nicht im Bereich der Holme HO diese überlappend, sondern um einen seitlichen Abstand VS gegen die Holme HO versetzt angeordnet sind, wobei der seitliche Versatz VS wenigstens 15 %, insbesondere wenigstens 20 %, vorzugsweise wenigstens 25 % des seitlichen Abstandes SH der beiden Holme HO beträgt. Die beiden Aufstellelemente AE2 bzw. die diesen zugeordneten Stützflächen SF2 sind symmetrisch bezüglich der vertikalen Mittellängsebene ML angeordnet. Der Abstand zwischen den den beiden Aufstellelementen AE2 zugeordneten Stützflächen SFS in y-Richtung ist mit SD bezeichnet.

Es ist ohne weiteres ersichtlich, dass durch den Versatz der Stützflächen SF2 der Aufstellelemente AE2 in Richtung der Mittellängsebene ML der Durchhang der Plane zwischen den in y-Richtung beabstandeten Aufstellelementen AE2 bzw. den diesen zugeordneten Stützflächen SF2 nur noch vernachlässigbar gering ist und sich an dieser Stelle keine nennenswerten Ansammlungen von Wasser bilden können. Seitlich der Stützflächen SF2 der Aufstellelemente AE2 nach außen zu den Holmen hin fällt die Plane von den vertikal über der Ebene der oberen Flächen der Spriegel SP bzw. der oberen Flächen der Holme HO liegenden Stützflächen SF2 der Aufstellelemente AE2 nach außen hin leicht ab, so dass an diesen Stellen sich keine Wasseransammlungen bilden können.

In Fig. 2(B) ist für die Anordnung mit von den Holmen zur Mittellängsebene hin versetzten Stützflächen SF2 der Aufstellelementen die Situation bei geöffnetem Planendach dargestellt, bei welcher anschaulich ist, dass durch die von den Holmen nach innen versetzten Stützflächen SF2 der Aufstellelemente AE2 die von den Stützflächen SF2 angehobene Plane in Falten zu den Holmen hin abfällt.

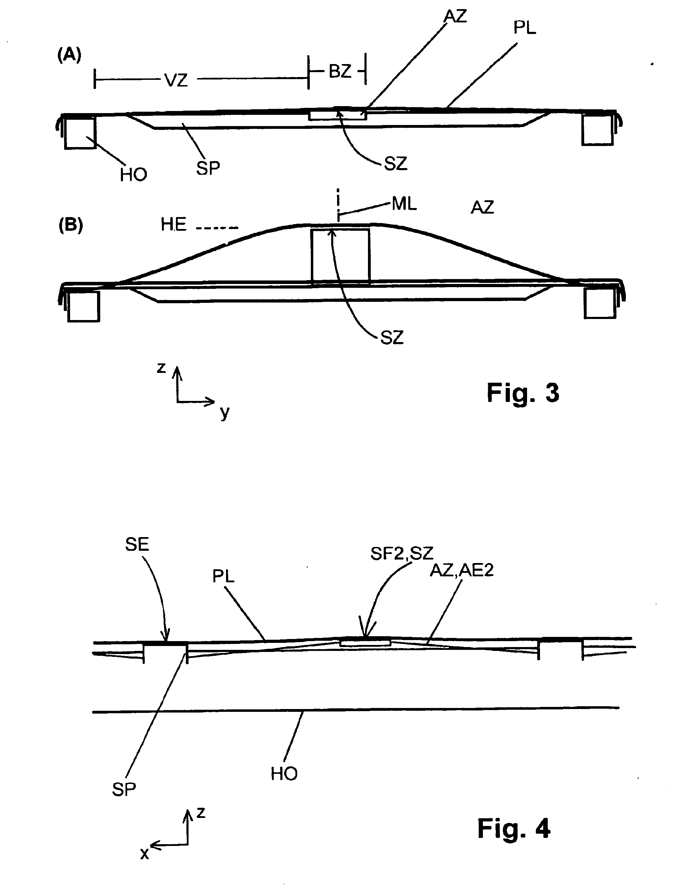

Fig. 3 zeigt eine bevorzugte Ausführungsform, bei welcher nur noch ein mit einer Stützfläche SZ bei der vertikalen Mittellängsebene ML mittig zwischen den in y-Richtung beabstandeten, außen liegenden Holmen HO angeordnetes Aufstellelement AZ vorgesehen ist. Die Plane fällt hierbei im geschlossenen Zustand des Daches nach Fig. 3(A) von der Stützfläche SZ des Aufstellelements AZ zu den Holmen nach außen hin leicht ab, so dass Wasser zuverlässig nach außen abgeleitet werden kann. In Bereichen über den Holmen HO in Längsrichtung zwischen benachbarten Spriegeln SP kann die Plane auch unter die Auflageebene der Spriegel durchhängen, so dass an diesen Stellen der Wasserabfluss von der Mitte nach außen weiter verbessert ist. Die Breite der Planen-Stützflächen SZ auf der Aufstellelemente AZ ist mit BZ bezeichnet. Die Breite BZ liegt vorteilhafterweise bei wenigstens 5 %, insbesondere wenigstens 10 % und höchstens 35 %, insbesondere höchstens 25 %, vorzugsweise höchstens 20 % von SH.

In Fig. 3(B) ist die Situation bei geöffnetem Dach skizziert. Die Plane fällt von dem durch die Stützflächen SZ der Aufstellelemente AZ angehobenen Abschnitt bei der Mittellängsebene ML in Falten zu den Holmen hin nach außen ab.

Fig. 4 zeigt eine Seitenansicht in der Mittellängsebene ML mit einem Ausschnitt in Längsrichtung. Die Stützflächen SF2, SZ der Aufstellelemente AZ bzw. AE2 liegen in vertikaler z-Richtung ungefähr in der Ebene SE der Planen-Auflageflächen der Spriegel SP. Die Plane PL folgt bei geschlossenem Planendach trotz der Zugspannung in Längsrichtung x einem nur gering gewellten Verlauf zwischen abwechselnden Auflageflächen auf den Spriegeln bzw. den Stützflächen SF der Stützbereiche der Aufstellelemente AZ bzw. AE2, wobei aber im Gegensatz zum Stand der Technik nach Fig. 1 bei den erfindungsgemäßen Anordnungen keine nennenswerten Mulden in Fahrzeugmitte entstehen und das seitliche Abfließen von Wasser begünstigende Gefälle der Plane vorliegen.

Die Lage der Stützflächen SF ungefähr in der Ebene SE kann durch Gestaltung der Aufstellelemente, z. B. Begrenzung der Anstellwinkel der Verbindungen zwischen den Spriegeln und den Stützbereichen, vorzugsweise durch Begrenzung des Winkels bei den Stützbereichen, in an sich bekannter Art eingestellt werden

In y-Richtung im Bereich der Holme HO kann die Plane zwischen in Längsrichtung x benachbarten Spriegeln unter die Auflageebene SE der oberen Flächen der Spriegel weiter bis maximal zu den oberen Flächen der Holme HO durchhängen.

Die Aufstellelemente können insbesondere Stabelemente und/oder Blechkörper enthalten. Die Stabelemente verlaufen zwischen den spriegelseitigen Anlenkungen der Aufstellelemente und den Stützflächen vorteilhafterweise im wesentlichen in vertikalen x-z-Ebenen. Die Stützflächen der Aufstellelemente können auch auf annähernd linienförmige Flächen in seitlicher y-Richtung reduziert sein. Die Dachplane kann an den Stützflächen mit den Aufstellelementen verbunden und/oder mit Verstärkungen versehen sein. Die Stützflächen an den Aufstellelementen können auch ersetzt sein durch mit der Plane verbundene Stützelemente, welche an den Aufstellelementen abgestützt sind.

## Patentansprüche

1. Nutzfahrzeug-Planendach-Anordnung mit zwei in einer FahrzeugLängsrichtung in gegebenem seitlichem Abstand parallel verlaufenden Dachholmen (HO), mit einer Mehrzahl von quer zur Längsrichtung in einer Querrichtung zwischen den Dachholmen verlaufenden und in Führungsbahnen entlang der Dachholme (HO) verschiebbaren Spriegeln (SP), mit einer auf den Spriegeln aufliegenden und mit diesen zwischen einer Öffnungsstellung und einer Schließstellung verschiebbaren flexiblen Dachplane (PL) und mit einer Aufstellvorrichtung mit mehreren Aufstellelementen (AE2, AZ) zwischen benachbarten Spriegeln, welche mit äußeren Anlenkungen an den Spriegeln abgestützt sind und beim Zusammenschieben benachbarter Spriegel aus deren Maximalabstand mit flachem Verlauf der Dachplane ein Auffalten der Dachplane mittels in Längsrichtung zwischen den Anlenkungen liegenden und bis zu einer Aufstellebene anhebbaren Stützflächen bewirken, **dadurch gekennzeichnet, dass** die den Dachholmen (HO) in Querrichtung nächsten Stützflächen (SF2, SZ) der Aufstellvorrichtung seitlich gegen die Dachholme (HO) um wenigstens 15 % des gegenseitigen seitlichen Abstand der Dachholme (HO) zur Mittellängsebene (ML) des Fahrzeugs hin versetzt angeordnet sind und in der Schließstellung der Plane (PL) mit maximalem Abstand benachbarter Spriegel ein Absinken der Plane bei der Fahrzeugmitte vermindern.

2. Anordnung nach Anspruch 1, **dadurch gekennzeichnet, dass** die Stützflächen (SF2, SZ) der Aufstellvorrichtung (AE2, AZ) um wenigstens 20 %, vorzugsweise wenigstens 25 % des Abstands (SH) der Dachholme gegen diese seitlich versetzt sind.

3. Anordnung nach Anspruch 1 oder 2, **dadurch gekennzeichnet, dass** die Anlenkungen der Aufstellelemente (AE2, AZ) um im wesentlichen gleiche Maße wie die Stützflächen seitlich gegen die Dachholme versetzt sind.

4. Anordnung nach einem der Ansprüche 1 bis 3, **dadurch gekennzeichnet, dass** zwischen je zwei benachbarten Spriegeln zwei seitlich in Querrichtung voneinander beabstandete Aufstellelemente (AE2) vorgesehen sind.

5. Anordnung nach Anspruch 4, **dadurch gekennzeichnet, dass** Aufstellelementen (AE2), die in Querrichtung (y) voneinander beabstandet sind, jeweils eigene, gleichfalls in Querrichtung (y) beabstandete Stützflächen (SF2) zugeordnet sind.

6. Anordnung nach einem der Ansprüche 1 bis 3, **dadurch gekennzeichnet, dass** zwischen je zwei benachbarten Spriegeln nur ein mittig zwischen den Dachholmen angeordnetes Aufstellelement (AZ) vorgesehen ist.

7. Anordnung nach einem der Ansprüche 1 bis 6, **dadurch gekennzeichnet, dass** bei minimalem Abstand zweier benachbarter Spriegel deren äußere Enden eine Lücke in Längsrichtung einhalten.

## Claims

1. Tarpaulin-roof arrangement for a commercial vehicle, having two roof members (HO) running parallel, at a given lateral spacing apart, in a longitudinal vehicle direction, having a plurality of roof bows (SP) which run, transversely to the longitudinal direction, in a transverse direction between the roof members and can be displaced in guide tracks along the roof members (HO), having a flexible roof tarpaulin (PL) which rests on the roof bows and can be displaced therewith between an open position and a closed position, and having an erecting device with a plurality of erecting elements (AE2, AZ) between adjacent roof bows, these being supported on the roof bows by outer articulations and, when adjacent roof bows are pushed together from their maximum spacing apart with the roof tarpaulin in a flat configuration, cause the roof tarpaulin to fold up by means of supporting surfaces which are located in a longitudinal direction between the articulations and can be raised up to an erecting plane, **characterized in that** the supporting surfaces (SF2, SZ) of the erecting device which are closest to the roof members (HO), as seen in the transverse direction, are offset laterally in relation to the roof members (HO), in the direction of the longitudinal centre plane (ML) of the vehicle, by at least 15% of the lateral spacing between the roof members (HO) and, in the closed position of the tarpaulin (PL) with a maximum spacing between adjacent roof bows, reduce the extent to which the tarpaulin sinks down at the vehicle centre.

2. Arrangement according to Claim 1, **characterized in that** the supporting surfaces (SF2 SZ) of the erecting device (AE2, AZ) are offset laterally in relation to the roof members by at least 20%, preferably at least 25%, of the spacing (SH) between the roof members.

3. Arrangement according to Claim 1 or 2, **characterized in that** the articulations of the erecting elements (AE2, AZ) are offset laterally in relation to the roof members by essentially the same dimensions as the supporting surfaces.

4. Arrangement according to one of Claims 1 to 3, **characterized in that** two erecting elements (AE2) which are spaced apart from one another laterally in the transverse direction are provided between in each case two adjacent roof bows.

5. Arrangement according to Claim 4, **characterized in that** erecting elements (AE2), which are spaced apart from one another in the transverse direction (y), are each assigned dedicated supporting surfaces (SF2), which are likewise spaced apart in the transverse direction (y).

6. Arrangement according to one of Claims 1 to 3, **characterized in that** only an erecting element (AZ) which is arranged centrally between the roof members is provided between in each case two adjacent roof bows.

7. Arrangement according to one of Claims 1 to 6, **characterized in that**, with a minimum spacing between two adjacent roof bows, the outer ends of the latter maintain a gap in the longitudinal direction.

## Revendications

1. Ensemble de toit bâché pour véhicule utilitaire, comprenant deux longerons de toit (HO) s'étendant parallèlement à une distance latérale donnée dans une direction longitudinale du véhicule, comprenant une pluralité d'arceaux (SP) s'étendant transversalement par rapport à la direction longitudinale dans une direction transversale entre les longerons de toit et coulissant dans des glissières de guidage le long des longerons de toit (HO), comprenant une bâche de toit (PL) flexible reposant sur les arceaux et coulissant à l'aide de ces derniers entre une position d'ouverture et une position de fermeture et comprenant un dispositif de redressement doté de plusieurs éléments de redressement (AE2, AZ) entre des arceaux adjacents, lesquels éléments de redressement sont supportés par les arceaux par l'intermédiaire d'articulations externes et provoquent, lors du rapprochement d'arceaux adjacents à partir de leur espacement maximal avec une allure plane de la bâche de toit, un repliement de la bâche de toit au moyen de surfaces d'appui pouvant être relevées jusqu'à un plan de relèvement et situées entre les articulations dans la direction longitudinale, **caractérisé en ce que** les surfaces d'appui (SF2, SZ) du dispositif de redressement les plus proches des longerons de toit (HO) dans la direction transversale sont disposées de manière décalée latéralement, en direction du plan médian longitudinal (ML) du véhicule, par rapport aux longerons de toit (HO), d'au moins 15 % de l'espacement latéral mutuel des longerons de toit (HO) et réduisent un affaissement de la bâche au centre du véhicule dans la position de fermeture de la bâche (PL) présentant un espacement maximal des arceaux adjacents.

2. Agencement selon la revendication 1, **caractérisé en ce que** les surfaces d'appui (SF2, SZ) du dispositif de redressement (AE2, AZ) sont décalées latéralement par rapport aux longerons de toit d'au moins 20 %, de préférence d'au moins 25 %, de l'espacement (SH) des longerons de toit.

3. Agencement selon la revendication 1 ou 2, **caractérisé en ce que** les articulations des éléments de redressement (AE2, AZ) sont décalées latéralement par rapport aux longerons de toit d'essentiellement la même grandeur que les surfaces d'appui.

4. Agencement selon l'une quelconque des revendications 1 à 3, **caractérisé en ce que** deux éléments de redressement (AE2) espacés latéralement l'un de l'autre dans la direction transversale sont prévus entre deux arceaux adjacents respectifs.

5. Agencement selon la revendication 4, **caractérisé en ce qu'**à des éléments de redressement (AE2) qui sont espacés l'un de l'autre dans la direction transversale (y) sont associées des surfaces d'appui (SF2) propres également espacées dans la direction transversale (y).

6. Agencement selon l'une quelconque des revendications 1 à 3, **caractérisé en ce que** seulement un élément de redressement (AZ) disposé de manière centrale entre les longerons de toit est prévu entre deux arceaux adjacents respectifs.

7. Agencement selon l'une quelconque des revendications 1 à 6, **caractérisé en ce qu'**en cas d'espacement minimal de deux arceaux adjacents, leurs extrémités extérieures maintiennent un intervalle dans la direction longitudinale.
